# FASCICULE DE BREVET EUROPEEN

(11) **EP 3 231 221 B1**
(45) Date de publication et mention de la délivrance du brevet: **10.10.2018**
(21) Numéro de dépôt: 15805499.9
(22) Date de dépôt: 08.12.2015
(51) Int. Cl.: H04W 48/06, H04W 48/12, H04W 84/12

(54) **PROCÉDÉ D'EXÉCUTION D'UNE PHASE D'APPAIRAGE PAR UN POINT D'ACCÈS SANS-FIL**
VERFAHREN ZUR AUSFÜHRUNG EINES PEERINGPHASE DURCH EINEN DRAHTLOSEN ZUGANGSPUNKT
METHOD FOR EXECUTING A PEERING PHASE BY A WIRELESS ACCESS POINT

(30) Priorité: 11.12.2014 FR 1462219
(43) Date de publication de la demande: 18.10.2017
(73) Titulaire: Sagemcom Broadband SAS, 92500 Rueil-Malmaison (FR)
(72) Inventeur: VANKIEKEN, Nicolas, 92500 Rueil Malmaison (FR)
(74) Mandataire: Cabinet Le Guen Maillet
(86) Numéro de dépôt international: PCT/EP2015/078941
(87) Numéro de publication internationale: WO 2016/091862

(56) Documents cités:
- EP-A1- 2 528 391
- Kevin 0 Robinson ET AL: "Wi-Fi Simple Configuration Protocol and Usability Best Practices for the Wi-Fi Protected Setup(TM) Program Version 2.0.1", , 20 avril 2011 (2011-04-20), XP055119577, Extrait de l'Internet: URL:http://www.wi-fi.org/system/files/wsc_ best_practices_v2_0_1.pdf [extrait le 2014-05-22]
- "Configuration Guide for RFMS 3.0 Initial Configuration XXX-XXXXXX-XX [WiNG 5.1 ] How-To Guide [Client Load Balancing and Smart Band Control] [Month] 2009 Revision [Rev]", , 1 janvier 2009 (2009-01-01), pages 1-34, XP055205385, Extrait de l'Internet: URL:http://www.michaelfmcnamara.com/files/ motorola/WiNG5_Load-Balance_How-to.pdf [extrait le 2015-07-29]

## Description

La présente invention concerne une phase d'appairage permettant d'appairer au moins un dispositif de communication à un point d'accès sans-fil, le point d'accès sans-fil étant destiné à créer au moyen d'une technologie de communication radio une pluralité de cellules dans des bandes spectrales respectives distinctes.

La mise en oeuvre de réseaux locaux sans-fil WLAN (« Wireless Local Area Network » en anglais) offre une grande flexibilité aux utilisateurs de dispositifs de communication, tels que des ordinateurs, des tablettes, des téléphones intelligents, etc. Afin de ne pas autoriser tout dispositif de communication à se connecter à un réseau WLAN et à avoir accès aux échanges de données intervenant via le réseau WLAN, des protocoles de sécurité sont mis en oeuvre. Assurer la sécurité du réseau WLAN ne doit cependant pas se faire au détriment d'une simplicité de configuration.

Par exemple, dans le cadre d'un réseau Wi-Fi (marque déposée), le protocole WPS (« Wi-Fi Protected Setup » en anglais) peut être mis en oeuvre. Le but du protocole WPS est que la phase de configuration pour sécuriser un réseau Wi-Fi soit simple, donc accessible à des utilisateurs sans connaissances particulières en configuration de réseau de communication. Le protocole WPS propose au moins trois manières de permettre à un dispositif de communication de s'appairer avec un point d'accès sans-fil WAP (« Wireless Access Point » en anglais), c'est-à-dire de récupérer auprès dudit point d'accès sans-fil WAP des clés de chiffrement permettant de communiquer de manière sécurisée au sein du réseau Wi-Fi (marque déposée) : la procédure d'appairage PIN (« Personal Identification Number » en anglais), la procédure d'appairage PBC (« Push-Button Configuration » en anglais) et la procédure d'appairage NFC (« Near Field Communication » en anglais).

La procédure d'appairage PIN repose sur un code PIN fourni par le dispositif de communication cherchant à se connecter au réseau Wi-Fi (marque déposée) ; ce code est alors saisi par un utilisateur via une interface utilisateur du point d'accès sans-fil WAP. A l'inverse, il est aussi possible de saisir un code PIN, fourni par le point d'accès sans-fil WAP, via une interface utilisateur du dispositif de communication cherchant à se connecter au réseau Wi-Fi (marque déposée). Cependant, en 2011, le chercheur Stefan Viehöck a mis en évidence une faille importante dans la procédure d'appairage PIN, ce qui la rend aujourd'hui non recommandée.

La procédure d'appairage PBC repose sur le fait que l'utilisateur appuie sur un bouton, qu'il soit physique ou virtuel, à la fois sur le point d'accès sans-fil WAP et sur le dispositif de communication à connecter au réseau Wi-Fi (marque déposée) sécurisé. La procédure d'appairage PBC est ainsi telle que le point d'accès sans-fil WAP fournit ainsi, pendant un laps de temps de durée prédéfinie et à tout dispositif de communication en faisant la requête, une autorisation systématique d'appairage.

La procédure d'appairage NFC repose sur le fait que l'utilisateur approche le dispositif de communication à connecter au réseau Wi-Fi (marque déposée) auprès du point d'accès WAP pour établir une communication en champ proche. La procédure d'appairage NFC est ainsi telle que le point d'accès sans-fil WAP fournit ainsi, à tout dispositif de communication en faisant la requête par communication en champ proche NFC, une autorisation systématique d'appairage. Cette solution est particulièrement pratique pour des dispositifs de communication de petite taille, *e.g.* qui tiennent dans la main.

Dans le cadre des procédures d'appairage PBC et NFC, lorsque le point d'accès WAP crée plusieurs cellules selon plusieurs bandes spectrales respectives (e.g. à 2.4 GHz et à 5 GHz dans le cadre de réseaux Wi-Fi (marque déposée)), le point d'accès sans-fil WAP n'a pas la maîtrise de la bande spectrale via laquelle un dispositif de communication va chercher à s'appairer. Ledit dispositif de communication peut alors s'appairer au point d'accès sans-fil WAP via une cellule qui se trouve être de moins bonne performance qu'une autre cellule créée par ledit point d'accès sans-fil WAP.

Il est connu le document "Wi-Fi Simple Configuration Protocol and Usability Best Practice for the Wi-Fi Protected Setup Program", Version 2.0.1, Wi-Fi Alliance, Avril 2011, qui décrit l'appairage de terminaux à un point d'accès Wi-Fi, notamment la procédure d'appairage PBC et la procédure d'appairage PIN.

Il est aussi connu le document "[WING 5.11 How-To Guide [Client Load Balancing and Smart Band Control], Motorola, 2009, qui décrit comment un point d'accès peut effectuer un contrôle de balance de charge dans différentes bandes fréquentielles que ledit point d'accès supporte.

Il est souhaitable de pallier ces inconvénients de l'état de la technique. Il est aussi souhaitable de fournir une solution qui soit simple à mettre en oeuvre et qui permette de supporter les dispositifs de communication, compatibles avec la technologie radio dudit point d'accès sans-fil WAP, déjà disponibles sur étagère.

L'invention concerne un procédé d'exécution d'une phase d'appairage permettant d'appairer au moins un dispositif de communication à un point d'accès sans-fil créant au moyen d'une technologie de communication radio une pluralité de cellules dans des bandes spectrales respectives distinctes. Le procédé est tel que le point d'accès sans-fil effectue les étapes suivantes dans le cadre de ladite phase d'appairage : obtenir un ordonnancement des cellules créées par ledit point d'accès en fonction d'un critère d'occupation desdites bandes spectrales ; et activer une autorisation systématique d'appairage via chaque dite cellule pendant une première durée prédéfinie, de tout dispositif de communication qui en fait la demande, en partant de la cellule dans la bande spectrale la moins occupée jusqu'à la cellule dans la bande spectrale la plus occupée d'après l'ordonnancement obtenu, en appliquant un décalage temporel, entre les activations d'autorisation systématique d'appairage, d'une seconde durée prédéfinie qui est au moins égale à un laps de temps statistiquement nécessaire au dispositif de communication pour effectuer l'appairage avec le point d'accès sans-fil et qui est strictement inférieure à ladite première durée prédéfinie. Ainsi, l'appairage via une cellule de meilleures performances (que d'au moins une autre cellule créée par le point d'accès sans-fil) est favorisé. Par ajustement (*e*.*g*. en laboratoire) de ladite seconde durée, la latence induite par la mise en oeuvre du décalage temporel est minimisée.

Selon un mode de réalisation particulier, pour obtenir ledit ordonnancement, le point d'accès sans-fil effectue une collecte d'informations relatives à toute cellule créée selon ladite technologie de communication radio et détectée par ledit point d'accès sans-fil dans le voisinage dudit point d'accès sans-fil.

Selon un mode de réalisation particulier, lesdites bandes spectrales sont ordonnancées en fonction de la quantité de cellules, par bande spectrale, détectées dans le voisinage du point d'accès sans-fil. Ainsi, l'ordonnancement peut être facilement déterminé et/ou d'une quantité de canaux de communication, par bande spectrale, utilisés par lesdites cellules détectées dans le voisinage du point d'accès sans-fil.

Selon un mode de réalisation particulier, le point d'accès sans-fil effectue ladite collecte de manière régulière indépendamment de toute phase d'appairage. Ainsi, la phase d'appairage peut démarrer sans latence supplémentaire liée à ladite collecte.

Selon un mode de réalisation particulier, le point d'accès sans-fil associe une liste de contrôle d'accès à chaque cellule que le point d'accès sans-fil a créée, chaque liste de contrôle d'accès étant adaptée pour contenir des identifiants de dispositif de communication auxquels le point d'accès sans-fil interdit de communiquer via la cellule à laquelle est associée ladite liste de contrôle d'accès, et le point d'accès sans-fil effectue l'étape suivante sur détection d'un appairage réussi avec un dispositif de communication dans le cadre de ladite phase d'appairage : inscrire un identifiant dudit dispositif de communication dans la liste de contrôle d'accès associée à toute cellule créée par le point d'accès sans fil, et appartenant à un même réseau de communication que la cellule via laquelle ledit dispositif de communication a été appairé avec le point d'accès sans fil, et qui est moins occupée que la cellule via laquelle ledit dispositif de communication a été appairé avec le point d'accès sans fil selon l'ordonnancement obtenu. Ainsi, lors de prochaines entrées dans la zone de couverture du point d'accès sans-fil, ledit dispositif de communication effectuera ses communications en priorité via la cellule offrant les meilleures performances.

Selon un mode de réalisation particulier, l'ordonnancement indexant lesdites bandes spectrales de la moins occupée à la plus occupée, le point d'accès effectue l'étape suivante sur détection d'une mise à jour dudit ordonnancement changeant un précédent ordonnancement en un nouvel ordonnancement : vider la liste de contrôle d'accès associée à chaque cellule créée dans une bande spectrale qui selon le précédent ordonnancement est d'index supérieur ou égal au premier index en séquence pour lequel il existe une différence entre le précédent ordonnancement et le nouvel ordonnancement.

Selon un mode de réalisation particulier, le point d'accès sans-fil exporte, dans le cadre d'une procédure d'appairage en champ proche au cours de laquelle le point d'accès sans-fil transmet systématiquement une autorisation d'appairage à tout dispositif de communication qui en fait la demande par communication en champ proche, des descripteurs représentatifs de chaque cellule, lesdits descripteurs étant présentés par le point d'accès sans-fil selon l'ordonnancement obtenu de la bande spectrale la moins occupée à la bande spectrale la plus occupée. Ainsi, l'appairage par communication en champ proche est effectué en privilégiant la cellule offrant les meilleures performances.

Selon un mode de réalisation particulier, ladite technologie de communication radio est de type Wi-Fi, et le point d'accès sans-fil crée deux cellules respectivement dans les bandes spectrales à 2.4 GHz et à 5 GHz telles que définies dans le cadre de la technologie de communication radio de type Wi-Fi.

L'invention concerne également un point d'accès sans-fil destiné à exécuter une phase d'appairage permettant d'appairer au moins un dispositif de communication audit point d'accès sans-fil, le point d'accès sans-fil étant destiné à créer au moyen d'une technologie de communication radio une pluralité de cellules dans des bandes spectrales respectives distinctes. Le point d'accès sans-fil est tel qu'il implémente dans le cadre de ladite phase d'appairage : des moyens pour obtenir un ordonnancement des cellules créées par ledit point d'accès en fonction d'un critère d'occupation desdites bandes spectrales ; et des moyens pour activer une autorisation systématique d'appairage via chaque dite cellule pendant une première durée prédéfinie, de tout dispositif de communication qui en fait la demande, en partant de la cellule dans la bande spectrale la moins occupée jusqu'à la cellule dans la bande spectrale la plus occupée d'après l'ordonnancement obtenu, en appliquant un décalage temporel, entre les activations d'autorisation systématique d'appairage, d'une seconde durée prédéfinie qui est au moins égale à un laps de temps statistiquement nécessaire au dispositif de communication pour effectuer l'appairage avec le point d'accès sans-fil et qui est strictement inférieure à ladite première durée prédéfinie.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de ses modes de réalisation, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication sans-fil dans lequel la présente invention peut être mise en oeuvre ;
- la Fig. 2 illustre schématiquement un exemple d'architecture matérielle d'un point d'accès dudit système de communication sans-fil ;
- la Fig. 3 illustre schématiquement un algorithme, mis en oeuvre par ledit point d'accès, d'obtention d'informations d'utilisation de bandes spectrales sur lesquelles s'appuie une technologie de communication radio dudit système de communication sans-fil ;
- la Fig. 4 illustre schématiquement un algorithme, mis en oeuvre par ledit point d'accès, de mise en oeuvre de phase d'appairage ;
- la Fig. 5 illustre schématiquement un premier algorithme, mis en oeuvre par ledit point d'accès, de mise à jour de liste de contrôle d'accès ;
- la Fig. 6 illustre schématiquement un second algorithme, mis en oeuvre par ledit point d'accès, de mise à jour de liste de contrôle d'accès ; et
- la Fig. 7 illustre schématiquement un algorithme, mis en oeuvre par ledit point d'accès, de mise à jour de descripteurs.

La présente invention est détaillée par la suite dans un contexte où un point d'accès met en oeuvre une technologie radio apte à créer une pluralité de cellules dans un système de communication sans-fil, les cellules utilisant des bandes spectrales respectives distinctes (au moins deux). Dans un mode de réalisation préféré, le point d'accès met en oeuvre une technologie radio de type Wi-Fi (marque déposée) permettant au point d'accès de créer une première cellule dans la bande spectrale à 2.4 GHz et une seconde cellule dans la bande spectrale à 5 GHz. Un tel point d'accès est préférentiellement intégré dans une passerelle résidentielle RGW (« Residential GateWay » en anglais).

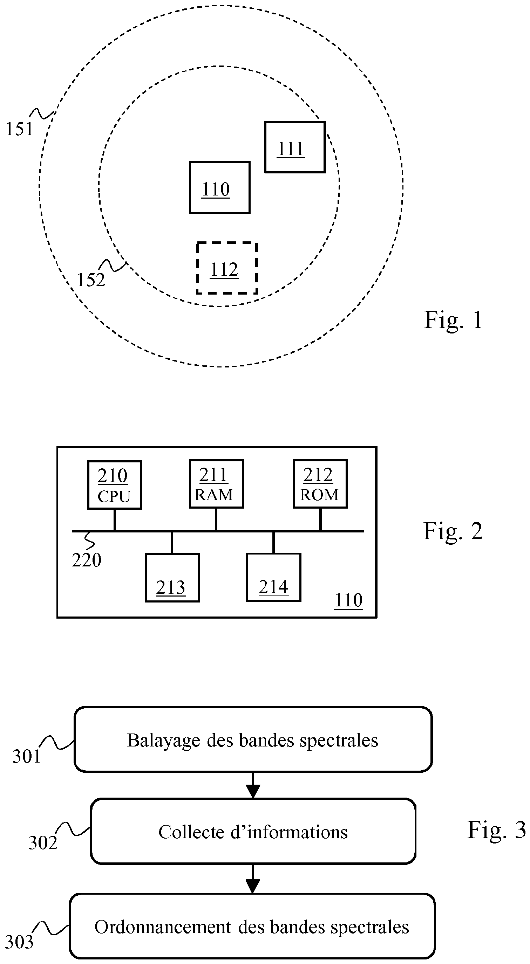

La Fig. 1 illustre schématiquement un système de communication sans-fil dans lequel la présente invention peut être mise en oeuvre.

Le système de la Fig. 1 comporte un point d'accès sans-fil WAP 110, qui gère toute connexion sans-fil à au moins un réseau local sans-fil WLAN. Un exemple d'architecture matérielle du point d'accès sans-fil WAP 110 est décrit ci-après en relation avec la Fig. 2.

Pour permettre à des dispositifs de communication d'être connectés à un réseau WLAN, le point d'accès sans-fil WAP 110 dispose d'interfaces radio adaptées pour créer au moins deux cellules 151, 152 utilisant des bandes spectrales respectives distinctes. Les cellules créées peuvent appartenir à des réseaux locaux sans-fil WLAN distincts, ou à un même réseau local sans-fil WLAN. Les cellules créées peuvent avoir des zones de couverture différentes. Par exemple, le point d'accès sans-fil WAP 110 crée une première cellule 151 conforme à la technologie radio Wi-Fi dans la bande spectrale à 2.4 GHz (première bande spectrale) et une seconde cellule 152 conforme à la technologie radio Wi-Fi dans la bande spectrale à 5 GHz (seconde bande spectrale).

Le point d'accès sans-fil WAP 110 est en charge d'accepter ou de refuser de connecter au réseau local sans-fil WLAN auquel appartient une cellule créée par ledit point d'accès sans-fil WAP 110 tout dispositif de communication présent ou entrant dans la zone de couverture de ladite cellule et qui en fait la requête. L'accès à chaque cellule, et donc au réseau local sans-fil WLAN auquel appartient ladite cellule, est sécurisé, en ce sens que, en dehors de phases d'appairage et d'initialisation de la connexion audit réseau local sans-fil WLAN, les communications sont chiffrées. Ledit dispositif de communication et le point d'accès sans-fil WAP 110 doivent alors effectuer une phase d'appairage visant à communiquer des clefs de chiffrement permettant de mettre en oeuvre l'accès sécurisé.

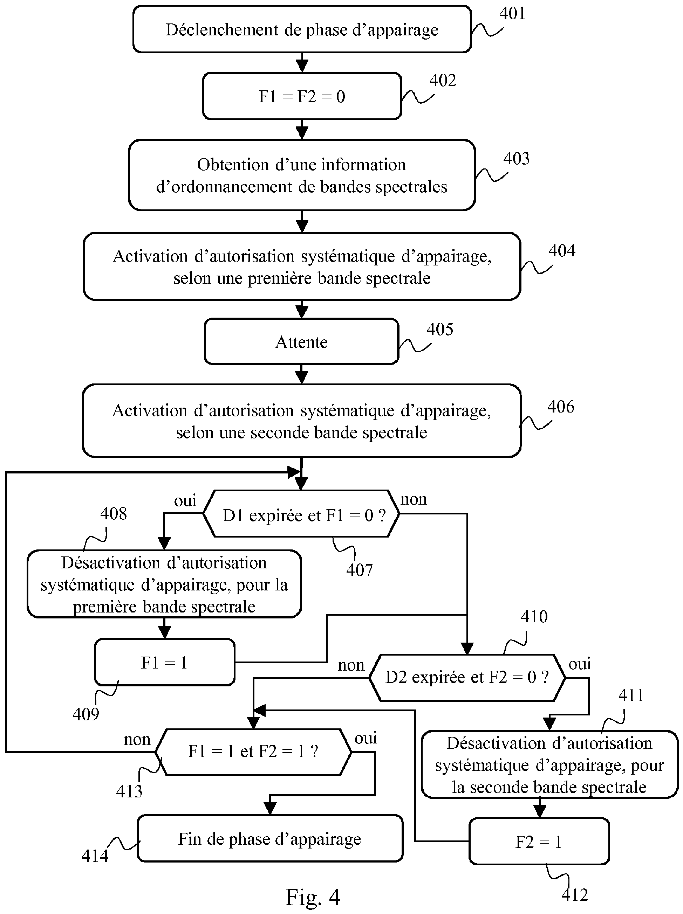

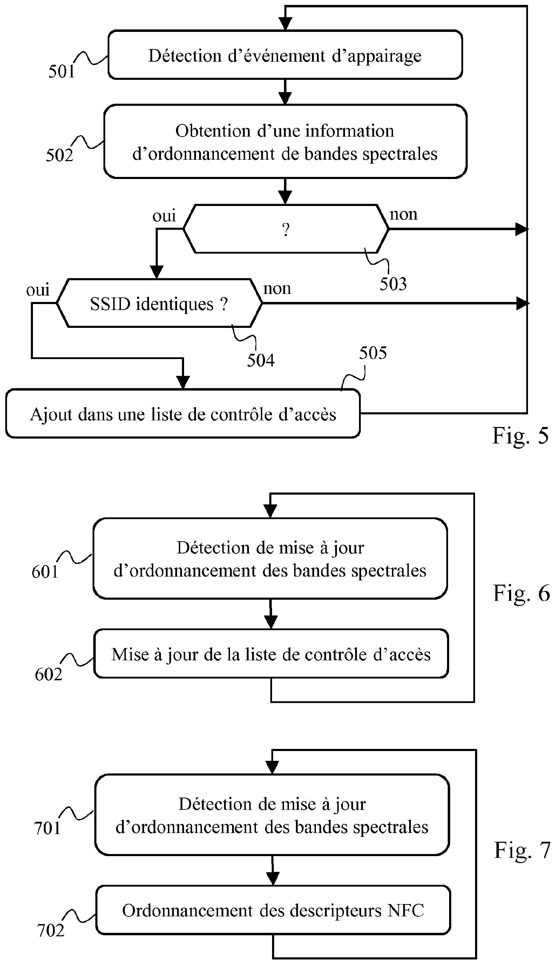

La Fig. 1 montre un premier dispositif de communication 111 appairé au point d'accès sans-fil WAP 110, ainsi qu'un second dispositif de communication 112 qu'un utilisateur souhaite appairer au point d'accès sans-fil WAP 110. Le premier dispositif de communication 111 est par exemple un ordinateur, une tablette, ou un téléphone intelligent (« smartphone » en anglais). Le second dispositif de communication 112 aussi est par exemple un ordinateur, une tablette, ou un téléphone intelligent. La procédure mise en oeuvre par le point d'accès sans-fil WAP 110 dans le cadre d'un appairage avec un dispositif de communication est décrite ci-après en relation avec la Fig. 4, et une procédure de collecte d'informations pour permettre ladite procédure d'appairage est décrite ci-après en relation avec la Fig. 3. En outre, une procédure d'export de descripteurs desdites cellules via une technologie de communication en champ proche NFC (« Near Field Communication » en anglais) est décrite ci-après en relation avec la Fig. 7.

Pour créer chaque cellule, le point d'accès sans-fil WAP 110 transmet typiquement des signaux de balise (« beacon » en anglais) correspondants permettant une synchronisation avec les dispositifs de communication souhaitant accéder au réseau local sans-fil WLAN auquel appartient ladite cellule. De tels signaux de balise incluent notamment un identifiant du réseau local sans-fil WLAN auquel appartient ladite cellule. Selon la technologie radio Wi-Fi (marque déposée), cet identifiant est appelé SSID (« Service Set Identifier » en anglais). Lorsque plusieurs cellules utilisant des bandes spectrales respectives distinctes sont créées par le point d'accès WAP 110 pour un même réseau local sans-fil WLAN, les signaux de balise respectivement transmis pour lesdites cellules incluent donc le même identifiant de réseau local sans-fil WLAN, *e*.*g*. le même SSID.

Au sein du point d'accès sans-fil WAP 110, chaque cellule créée par ledit point d'accès sans-fil WAP 110 peut être associée à une liste de contrôle d'accès ACL (« Access Control List » en anglais) qui stocke des identifiants, e.g. adresses MAC (« Médium Access Control » en anglais), de dispositifs de communication n'ayant pas le droit d'accéder via ladite cellule au réseau local sans-fil WLAN auquel appartient ladite cellule. Chaque dispositif de communication ayant un identifiant présent dans le réseau local sans-fil WLAN associé à une cellule peut toutefois accéder au réseau local sans-fil WLAN auquel appartient ladite cellule, mais via une autre cellule appartenant audit réseau local sans-fil WLAN. Des algorithmes manipulant de telles listes de contrôle d'accès ACL sont présentés ci-après en relation avec les Figs. 5 et 6.

La Fig. 2 illustre schématiquement un exemple d'architecture matérielle du point d'accès sans-fil WAP 110.

Le point d'accès sans-fil WAP 110 comporte alors, reliés par un bus de communication 220 : un processeur ou CPU (« Central Processing Unit » en anglais) 210 ; une mémoire vive RAM (« Random Access Memory » en anglais) 211 ; une mémoire morte ROM (« Read Only Memory » en anglais) 212 ; une unité de stockage ou un lecteur de support de stockage, tel qu'un lecteur de cartes SD (« Secure Digital » en anglais) ou un disque dur HDD (« Hard Disk Drive » en anglais) 213 ; et une pluralité 214 d'interfaces radio permettant au point d'accès sans-fil WAP 110 de créer lesdites cellules, de communiquer au sein desdites cellules et de balayer des bandes spectrales.

Le processeur 210 est capable d'exécuter des instructions chargées dans la RAM 211 à partir de la ROM 212, d'une mémoire externe (non représentée), d'un support de stockage, ou d'un réseau de communication. Lorsque le point d'accès sans-fil WAP 110 est mis sous tension, le processeur 210 est capable de lire de la RAM 211 des instructions et de les exécuter. Ces instructions forment un programme d'ordinateur causant la mise en oeuvre, par le processeur 210, de tout ou partie des algorithmes et étapes décrits ci-après.

Ainsi, tout ou partie des algorithmes et étapes décrits ci-après peut être implémenté sous forme logicielle par exécution d'un ensemble d'instructions par une machine programmable, tel qu'un DSP (« Digital Signal Processor » en anglais) ou un microcontrôleur. Tout ou partie des algorithmes et étapes décrits ci-après peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

La Fig. 3 illustre schématiquement un algorithme, mis en oeuvre par le point d'accès sans-fil WAP 110, d'obtention d'informations d'utilisation des bandes spectrales des cellules respectives créées par ledit point d'accès sans-fil WAP 110.

Dans une étape 301, le point d'accès sans-fil WAP 110 effectue un balayage (« scan » en anglais) de chacune desdites bandes spectrales (à savoir les première et seconde bandes spectrales dans le mode de réalisation préféré) pour évaluer une occupation desdites bandes spectrales.

Selon un premier exemple, le point d'accès sans-fil WAP 110 détecte une présence de signaux, considérés comme des interférences, dans lesdites bandes spectrales. Le point d'accès sans-fil WAP 110 peut déterminer dans quelle proportion temporelle chaque canal de communication défini par la technologie de communication radio mise en oeuvre est occupé (« busy » en anglais), et quel est le niveau de bruit pour chaque canal de communication. Le point d'accès WAP 110 peut déterminer un facteur d'interférence (« interference factor » en anglais) pour chaque canal de communication, comme on peut le retrouver dans des mécanismes de surveillance mis en oeuvre dans des sélections automatiques de canal ACS (« Automatic Channel Selection » en anglais) dans la technologie de communication radio de type Wi-Fi.

Selon un second exemple, privilégié, le point d'accès sans-fil WAP 110 détecte d'éventuelles cellules existantes dans le voisinage dudit point d'accès sans-fil WAP 110. Une cellule existant dans le voisinage du point d'accès sans-fil WAP 110 est une cellule créée par un point d'accès s'appuyant sur la même technologie de communication radio que le point d'accès sans-fil WAP 110 et dont la portée de signaux transmis atteint ledit point d'accès sans-fil WAP 110.

Dans une étape 302 suivante, le point d'accès sans-fil WAP 110 collecte des informations relatives auxdites cellules détectées dans le voisinage du point d'accès sans-fil WAP 110. Plus particulièrement, le point d'accès sans-fil WAP 110 obtient un identifiant de chaque réseau de communication WLAN auquel appartient au moins une cellule détectée dans le voisinage du point d'accès sans-fil WAP 110. Le point d'accès sans-fil WAP 110 peut obtenir des informations complémentaires concernant chaque cellule détectée dans le voisinage du point d'accès sans-fil WAP 110, comme par exemple une séquence de saut de fréquence (« frequency hopping sequence » en anglais) et/ou une information d'identifiant de canal de transmission, et/ou une information de puissance de signal reçu en provenance du point d'accès créant ladite cellule.

Dans une étape 303 suivante, le point d'accès WAP 110 effectue un ordonnancement des différentes bandes spectrales sur lesquelles s'appuient les cellules créées par ledit point d'accès sans-fil WAP 110, en fonction d'un critère d'occupation desdites bandes spectrales d'après les informations collectées à l'étape 302. Dans le mode de réalisation préféré, le point d'accès sans-fil WAP 110 effectue donc un ordonnancement entre la première bande spectrale et la seconde bande spectrale. L'ordonnancement étant fonction de l'occupation desdites bandes spectrales, ledit ordonnancement est dynamique du fait qu'il peut changer d'une exécution à l'autre de l'algorithme de la Fig. 3.

Comme détaillé par la suite, ledit ordonnancement définit un ordre de priorité d'activation d'autorisation systématique d'appairage entre les cellules créées par le point d'accès WAP 110, lesdites activations d'autorisation systématique d'appairage étant séparées dans le temps par un décalage temporel de durée prédéfinie.

Dans un mode de réalisation particulier, lesdites bandes spectrales sont ordonnancées en fonction de la quantité de cellules, par bande spectrale, détectées dans le voisinage du point d'accès sans-fil WAP 110. Le critère d'occupation est alors ladite quantité de cellules.

Dans un autre mode de réalisation particulier, lesdites bandes spectrales sont ordonnancées en fonction d'une quantité de canaux disponibles d'après des identifiants de canal de transmission et/ou des séquences de saut de fréquence utilisés par les points d'accès sans-fil créant les cellules détectées dans le voisinage du point d'accès WAP 110. Dans ce cas, une bande spectrale est plus disponible si elle a une quantité Q (Q ≥ 2) de tels points d'accès sans-fil qui occupent un même canal de communication qu'une autre bande spectrale occupée par une quantité Q (Q ≥ 2) de tels points d'accès sans-fil qui utilisent chacun un canal de communication diffèrent. Le critère d'occupation est alors une quantité de canaux de communication occupés (ou libres) par bande spectrale. Ce critère peut être utilisé en complément de celui précédemment décrit, à savoir que la quantité de cellules, par bande spectrale est d'abord examinée, et si les bandes spectrales présentent la même quantité de cellules, la quantité de canaux disponibles, par bande spectrale, est examinée.

Dans encore un autre mode de réalisation particulier, lorsque deux bandes spectrales comportent une même quantité de canaux disponibles et/ou une même quantité de canaux disponibles, le point d'accès WAP 110 effectue l'ordonnancement en fonction d'une pondération d'informations de puissance de signal reçu en provenance des points d'accès sans-fil créant les cellules détectées dans le voisinage du point d'accès WAP 110 : plus le signal reçu est fort, plus le poids associé à ladite cellule du voisinage est élevé.

Dans encore un autre mode de réalisation particulier, plus une bande spectrale a un facteur d'interférence élevé, plus ladite bande spectrale est considérée comme occupée. Le critère d'occupation est alors ledit facteur d'interférence.

L'ordonnancement est réalisé de préférence en plaçant en tête la bande spectrale la moins occupée, c'est-à-dire, dans le mode de réalisation particulier mentionné ci-dessus, la bande spectrale présentant la quantité de cellules détectées dans le voisinage du point d'accès sans-fil WAP 110 la plus faible. Cet ordonnancement préféré est particulièrement utile pour présenter des descripteurs à exporter, tel que décrit ci-après en relation avec la Fig. 7.

La Fig. 4 illustre schématiquement un algorithme, mis en oeuvre par le point d'accès sans-fil WAP 110, de mise en oeuvre de phase d'appairage.

Dans une étape 401, le point d'accès sans-fil WAP 110 détecte un déclenchement de phase d'appairage. Par exemple, le point d'accès sans-fil WAP 110 détecte un appui par un utilisateur sur un bouton dédié d'une interface homme-machine du point d'accès sans-fil WAP 110. C'est le principe de déclenchement de la procédure d'appairage PBC classique déjà évoquée (*i*.*e*. procédure d'appairage PBC qui ne tient pas compte de l'ordonnancement dynamique de cellules). Par exemple, le point d'accès sans-fil WAP 110 peut être tel qu'un appui simple sur ledit bouton déclenche l'exécution de l'algorithme de la Fig. 4, alors qu'un double appui (deux appuis successifs dans un laps de temps de durée maximale prédéfinie) déclenche l'exécution de la procédure d'appairage PBC classique. D'autres approches peuvent conduire le point d'accès sans-fil WAP 110 à déclencher une phase d'appairage, comme par exemple une réception de commande particulière de la part d'un dispositif déjà connecté à un réseau de communication sans-fil WLAN via l'une des cellules créées par le point d'accès sans-fil WAP 110.

Dans une étape 402 suivante, le point d'accès sans-fil WAP 110 initialise deux variables F1 et F2 à « 0 ». Ces variables F1 et F2 servent à indiquer si le point d'accès sans-fil WAP 110 a désactivé une autorisation systématique d'appairage pour respectivement les première et seconde bandes spectrales, *i*.*e*. via respectivement les cellules créées par le point d'accès sans-fil WAP 110 dans les première et seconde bandes spectrales.

Dans une étape 403 suivante, le point d'accès sans-fil WAP 110 obtient une information d'ordonnancement des première et seconde bandes spectrales. Cette information résulte du balayage des bandes spectrales, tel que déjà décrit en relation avec la Fig. 3. Par exemple, le point d'accès sans-fil WAP 110 requiert qu'un tel balayage des bandes spectrales soit effectué dans le cadre de la phase d'appairage déclenchée à l'étape 401. Cela entraîne cependant une certaine latence d'exécution de ladite phase d'appairage, ce qui peut être désagréable du point de vue de l'utilisateur. Un mode de réalisation privilégié est donc d'effectuer le balayage des bandes spectrales en tâche de fond, de manière régulière (pour détecter des apparitions et disparitions de cellules du voisinage), indépendamment de toute phase d'appairage. Ainsi, le point d'accès sans-fil WAP 110 dispose de l'information d'ordonnancement au moment où la phase d'appairage est déclenchée.

Dans une étape 404 suivante, le point d'accès sans-fil WAP 110 active l'autorisation systématique d'appairage via la cellule créée par le point d'accès sans-fil WAP 110 dans la bande spectrale la moins occupée (parmi les première et seconde bandes spectrales) selon l'ordonnancement obtenu à l'étape 403. En d'autres termes, tout dispositif de communication faisant une demande d'appairage via ladite cellule reçoit, de manière systématique, une autorisation de la part du point d'accès sans-fil WAP 110. Le point d'accès sans-fil WAP 110 active l'autorisation d'appairage via ladite cellule, pour une durée D1. Par exemple, la durée D1 est égale à deux minutes.

Dans une étape 405 suivante, le point d'accès sans-fil WAP 110 effectue une étape d'attente d'une durée prédéfinie T. La durée T est non nulle et strictement inférieure à la durée D1. La durée T est telle qu'elle permet (d'un point de vue statistique) à un dispositif de communication en attente d'appairage d'initier l'appairage avec ledit point d'accès sans-fil WAP 110 via la bande spectrale la moins occupée selon l'ordonnancement obtenu à l'étape 403.

Dans une étape 406 suivante, le point d'accès sans-fil WAP 110 active l'autorisation systématique d'appairage via la cellule créée par le point d'accès WAP 110 dans la bande spectrale la plus occupée (parmi les première et seconde bandes spectrales) selon l'ordonnancement obtenu à l'étape 403. En d'autres termes, tout dispositif de communication faisant une demande d'appairage via ladite cellule reçoit, de manière systématique, une autorisation de la part du point d'accès sans-fil WAP 110. Le point d'accès sans-fil WAP 110 active l'autorisation d'appairage via ladite cellule pour une durée D2 qui est préférentiellement égale à la durée D1. Par exemple, la durée D2 est aussi égale à deux minutes.

Dans une étape 407 suivante, le point d'accès sans-fil WAP 110 vérifie si la durée D1 est expirée et si la variable F1 est égale à « 1 ». Si la durée D1 n'est pas expirée et/ou si la variable F1 est toujours égale à « 0 », une étape 410 est effectuée ; sinon, une étape 408 est effectuée.

Dans l'étape 408, le point d'accès sans-fil WAP 110 désactive l'autorisation systématique d'appairage via la cellule créée par le point d'accès WAP 110 dans la bande spectrale la moins occupée (parmi les première et seconde bandes spectrales) selon l'ordonnancement obtenu à l'étape 403. En d'autres termes, tout dispositif de communication faisant une demande d'appairage via ladite cellule reçoit, de manière systématique, un refus de la part du point d'accès sans-fil WAP 110. Puis, dans une étape 409, le point d'accès sans-fil WAP 110 met la variable F1 à « 1 », puis effectue l'étape 410.

Dans l'étape 410, le point d'accès sans-fil WAP 110 vérifie si la durée D2 est expirée et si la variable F2 est égale à « 1 ». Si la durée D2 n'est pas expirée et/ou si la variable F2 est toujours égale à « 0 », une étape 413 est effectuée ; sinon, une étape 411 est effectuée.

Dans l'étape 411, le point d'accès sans-fil WAP 110 désactive l'autorisation systématique d'appairage via la cellule créée par le point d'accès WAP 110 dans la bande spectrale la plus occupée (parmi les première et seconde bandes spectrales) selon l'ordonnancement obtenu à l'étape 403. En d'autres termes, tout dispositif de communication faisant une demande d'appairage via ladite cellule reçoit, de manière systématique, un refus de la part du point d'accès sans-fil WAP 110. Puis, dans une étape 412, le point d'accès sans-fil WAP 110 met la variable F2 à « 1 », puis effectue l'étape 413.

Dans l'étape 413, le point d'accès sans-fil WAP 110 vérifie si la variable F1 est égale à « 1 » et si la variable F2 est égale à « 1 ». Si les variables F1 et F2 sont toutes deux égales à « 1 », il est mis fin à la phase d'appairage dans une étape 414 ; sinon, l'étape 407 est répétée.

L'algorithme de la Fig. 4 décrit un algorithme de mise en oeuvre de phase d'appairage, selon deux bandes spectrales distinctes. Les mêmes principes sont appliqués en présence d'un plus grand nombre de bandes spectrales distinctes. En d'autres termes, le point d'accès sans-fil WAP 110 active une autorisation systématique d'appairage via chaque cellule pendant une première durée prédéfinie (D1 ; D2), de tout dispositif de communication qui en fait la demande, en partant de la cellule dans la bande spectrale la moins occupée jusqu'à la cellule dans la bande spectrale la plus occupée d'après l'ordonnancement obtenu à l'étape 403, en appliquant un décalage temporel d'une seconde durée prédéfinie (T) qui est au moins égale à un laps de temps statistiquement nécessaire au dispositif de communication pour effectuer l'appairage avec le point d'accès sans-fil et qui est strictement inférieure à ladite première durée prédéfinie (D1 ; D2).

La Fig. 5 illustre schématiquement un premier algorithme, mis en oeuvre par le point d'accès sans-fil WAP 110, de mise à jour de liste de contrôle d'accès ACL.

Dans une étape 501, le point d'accès sans-fil WAP 110 détecte un événement d'appairage d'un dispositif de communication audit point d'accès sans-fil WAP 110. Ledit dispositif de communication est donc nouvellement appairé avec le point d'accès sans-fil WAP 110. L'événement d'appairage résulte d'un succès d'appairage lorsque le point d'accès WAP 110 a activé l'autorisation systématique d'appairage via au moins une des cellules créées par le point d'accès WAP 110, comme dans le cadre de l'algorithme de la Fig. 4.

Dans une étape 502 suivante, le point d'accès sans-fil WAP 110 obtient une information d'ordonnancement des première et seconde bandes spectrales. Cette information résulte du balayage desdites bandes spectrales, tel que déjà décrit en relation avec la Fig. 3.

Dans une étape 503 suivante, le point d'accès sans-fil WAP 110 vérifie si l'appairage a été réalisé via la cellule dans la bande spectrale la moins occupée (parmi les première et seconde bandes spectrales) selon l'ordonnancement obtenu à l'étape 502. Si tel est le cas, une étape 504 est effectuée ; sinon, le point d'accès sans-fil WAP 110 se remet en attente d'un nouvel événement d'appairage et répète l'étape 501.

Dans l'étape 504, le point d'accès sans-fil WAP 110 vérifie si les première et seconde bandes spectrales correspondent à un même réseau de communication WLAN, c'est-à-dire, vérifie si le même identifiant de réseau de communication WLAN est diffusé dans les cellules respectivement créées par ledit point d'accès sans-fil WAP 110 sur lesdites bandes spectrales. Selon la technologie radio Wi-Fi (marque déposée), le point d'accès sans-fil WAP 110 vérifie si le même identifiant SSID est diffusé dans les balises desdites cellules. Si tel est le cas, une étape 505 est effectuée ; sinon, le point d'accès sans-fil WAP 110 se remet en attente d'un nouvel événement d'appairage et répète l'étape 501.

Dans l'étape 505, le point d'accès sans-fil WAP 110 ajoute un identifiant du dispositif de communication nouvellement appairé à la liste de contrôle d'accès ACL associée à la cellule créée par le point d'accès WAP 110 dans la bande spectrale la plus occupée (parmi les première et seconde bandes spectrales) selon l'ordonnancement obtenu à l'étape 502. Puis, le point d'accès sans-fil WAP 110 se remet en attente d'un nouvel événement d'appairage et répète l'étape 501.

Il convient de noter que le point d'accès sans-fil WAP 110 peut en variante mettre en oeuvre l'algorithme de la Fig. 5 uniquement dans le cas où les première et seconde bandes spectrales correspondent à un même réseau de communication WLAN ; dans ce cas, le point d'accès sans-fil WAP 110 n'a pas à effectuer l'étape 504 et l'algorithme passe directement de l'étape 503 à l'étape 505 lorsque l'appairage a été réalisé via la cellule dans la bande spectrale la moins occupée (parmi les première et seconde bandes spectrales) selon l'ordonnancement obtenu à l'étape 502.

L'algorithme de la Fig. 5 décrit un algorithme de mise à jour de liste de contrôle d'accès ACL lorsque deux bandes spectrales distinctes sont utilisées par le point d'accès WAP 110 pour respectivement créer lesdites cellules. Les mêmes principes sont appliqués en présence d'un plus grand nombre de bandes spectrales distinctes. En d'autres termes, le point d'accès WAP 110 inscrit l'identifiant du dispositif de communication nouvellement appairé dans la liste de contrôle d'accès associée à toute cellule créée par le point d'accès sans fil, et appartenant à un même réseau de communication que la cellule via laquelle ledit dispositif de communication a été appairé avec le point d'accès sans fil, et qui est moins occupée que la cellule via laquelle ledit dispositif de communication a été appairé avec le point d'accès sans fil selon l'ordonnancement obtenu à l'étape 502.

La Fig. 6 illustre schématiquement un second algorithme, mis en oeuvre par ledit point d'accès sans-fil WAP 110, de mise à jour de liste de contrôle d'accès ACL.

Dans une étape 601, le point d'accès sans-fil WAP 110 détecte une mise à jour d'ordonnancement des première et seconde bandes spectrales, c'est-à-dire qu'un nouvel ordonnancement des première et seconde bandes spectrales a été établi et qu'un précédent ordonnancement (s'il existe) des première et seconde bandes spectrales est devenu obsolète.

Dans une étape 602, le point d'accès sans-fil WAP 110 retire de la liste de contrôle d'accès ACL associée à la cellule la plus occupée (parmi les première et seconde bandes spectrales) selon l'ordonnancement précédent et qui est désormais la cellule la moins occupée (parmi les première et seconde bandes spectrales) selon le nouvel ordonnancement, chaque identifiant qui a été ajouté à ladite liste de contrôle d'accès ACL par exécution de l'algorithme de la Fig. 5 dans le cadre du précédent ordonnancement. Il convient de noter que la liste de contrôle d'accès ACL associée à la cellule qui apparaissait la moins occupée (parmi les première et seconde bandes spectrales) selon l'ordonnancement précédent, et qui est désormais la plus occupée (parmi les première et seconde bandes spectrales) selon le nouvel ordonnancement, était vide au moment de l'établissement du nouvel ordonnancement.

Chaque liste de contrôle d'accès ACL associée à une cellule créée par le point d'accès sans-fil WAP 110 peut être fusionnée avec une liste de contrôle d'accès associée au réseau de communication sans-fil WLAN auquel est associée ladite cellule. Une telle liste de contrôle d'accès associée à un réseau de communication sans-fil WLAN est connue de l'homme du métier de la gestion d'accès à des réseaux de communication sans-fil WLAN, et permet d'interdire l'accès (au moins sur des plages horaires prédéterminées) audit réseau de communication WLAN à des dispositifs de communication dont des identifiants respectifs sont inscrits dans ladite liste. Lorsque chaque liste de contrôle d'accès ACL associée à une cellule créée par le point d'accès sans-fil WAP 110 est fusionnée avec une liste de contrôle d'accès associée au réseau de communication sans-fil WLAN auquel est associée ladite cellule, le point d'accès sans-fil WAP 110 stocke l'identifiant de dispositif de communication à l'étape 505 en association avec un identifiant de la cellule la plus occupée (parmi les première et seconde bandes spectrales) selon l'ordonnancement obtenu à l'étape 502. Ainsi, le point d'accès sans-fil WAP 110 retire, dans l'étape 602, de la liste de contrôle d'accès associée à un réseau de communication WLAN les identifiants de dispositif de communication qui sont associés à l'identifiant de la cellule qui est désormais la cellule la moins occupée (parmi les première et seconde bandes spectrales) selon le nouvel ordonnancement.

L'algorithme de la Fig. 6 décrit un algorithme de mise à jour de liste de contrôle d'accès ACL lorsque deux bandes spectrales distinctes sont utilisées par le point d'accès WAP 110 pour respectivement créer lesdites cellules. Les mêmes principes sont appliqués en présence d'un plus grand nombre de bandes spectrales distinctes. En d'autres termes, l'ordonnancement indexant lesdites bandes spectrales de la moins occupée à la plus occupée, le point d'accès WAP 110 vide la liste de contrôle d'accès ACL associée à chaque cellule créée dans une bande spectrale qui selon le précédent ordonnancement est d'index supérieur ou égal au premier index en séquence pour lequel il existe une différence entre le précédent ordonnancement et le nouvel ordonnancement.

La Fig. 7 illustre schématiquement un algorithme, mis en oeuvre par ledit point d'accès, de mise à jour de descripteurs. De tels descripteurs sont utilisés dans le cadre de la procédure d'appairage NFC déjà mentionnée et dans laquelle le point d'accès sans-fil WAP 110 transmet systématiquement une autorisation d'appairage à tout dispositif de communication qui en fait la demande par communication en champ proche.

Dans une étape 701, le point d'accès sans-fil WAP 110 détecte une mise à jour d'ordonnancement des première et seconde bandes spectrales, c'est-à-dire qu'un nouvel ordonnancement des première et seconde bandes spectrales a été établi et qu'un précédent ordonnancement (s'il existe) des première et seconde bandes spectrales est devenu obsolète.

Dans une étape 702 suivante, le point d'accès sans-fil WAP 110 obtient des descripteurs (« records » en anglais) de type NDEF (« NFC Data Exchange Format » en anglais) respectivement représentatifs des cellules créées par le point d'accès sans-fil WAP 110. Chaque descripteur de type NDEF indique notamment la bande spectrale dans laquelle la cellule représentée par ledit descripteur a été créée par le point d'accès sans-fil WAP 110. Chaque descripteur de type NDEF indique aussi un identifiant du réseau de communication WLAN auquel appartient ladite cellule. Chaque descripteur de type NDEF fournit en outre les clés de chiffrement à appliquer pour communiquer au sein du réseau de communication WLAN via ladite cellule.

Au cours de l'étape 702, le point d'accès sans-fil WAP 110 ordonnance les descripteurs obtenus, selon le nouvel ordonnancement. Ainsi, le point d'accès sans-fil WAP 110 ordonnance les descripteurs de la moins occupée des bandes spectrales dans lesquelles le point d'accès sans-fil WAP 110 a créé des cellules respectives à la plus occupée desdites bandes spectrales. Le point d'accès sans-fil WAP 110 exporte lesdits descripteurs selon cet ordonnancement, le descripteur de la moins occupée des bandes spectrales apparaissant alors en premier. Cet export est réalisé par le point d'accès sans-fil WAP 110 par l'envoi d'un message de type « Connection Handover Select », tel que standardisé par l'organisme « NFC forum », dans le cadre d'une procédure d'appairage NFC. Lesdits descripteurs apparaissent donc selon ledit ordonnancement au sein du message de type « Connection Handover Select ».

Ainsi, un dispositif de communication recevant ledit message de type « Connection Handover Select » étant supposé tenter d'effectuer l'appairage avec le point d'accès sans-fil WAP 110 en respectant l'ordre dans lequel sont décrites au sein dudit message les cellules créées par le point d'accès sans-fil WAP 110, la cellule créée dans la moins occupée des bandes spectrales est privilégiée.

Il convient de noter que l'ordonnancement des descripteurs dans le cadre d'une procédure d'appairage NFC pourrait être implémenté sans qu'il ne soit tenu compte dudit ordonnancement lors d'une procédure d'appairage de type PBC.

## Revendications

1. Procédé d'exécution d'une phase d'appairage permettant d'appairer au moins un dispositif de communication (112) à un point d'accès sans-fil (110) créant au moyen d'une technologie de communication radio une pluralité de cellules (151, 152) dans des bandes spectrales respectives distinctes, **caractérisé en ce que** le point d'accès sans-fil effectue les étapes suivantes dans le cadre de ladite phase d'appairage :
- obtenir (403) un ordonnancement des cellules créées par ledit point d'accès en fonction d'un critère d'occupation desdites bandes spectrales ; et
- activer (404, 406) une autorisation systématique d'appairage via chaque dite cellule pendant une première durée prédéfinie, de tout dispositif de communication qui en fait la demande, en partant de la cellule dans la bande spectrale la moins occupée jusqu'à la cellule dans la bande spectrale la plus occupée d'après l'ordonnancement obtenu, en appliquant (405) un décalage temporel, entre les activations d'autorisation systématique d'appairage, d'une seconde durée prédéfinie qui est au moins égale à un laps de temps statistiquement nécessaire au dispositif de communication pour effectuer l'appairage avec le point d'accès sans-fil et qui est strictement inférieure à ladite première durée prédéfinie.

2. Procédé selon la revendication 1, **caractérisé en ce que**, pour obtenir ledit ordonnancement, le point d'accès sans-fil effectue une collecte (302) d'informations relatives à toute cellule créée selon ladite technologie de communication radio et détectée par ledit point d'accès sans-fil dans le voisinage dudit point d'accès sans-fil.

3. Procédé selon la revendication 2, **caractérisé en ce que** lesdites bandes spectrales sont ordonnancées en fonction de la quantité de cellules, par bande spectrale, détectées dans le voisinage du point d'accès sans-fil et/ou d'une quantité de canaux de communication, par bande spectrale, utilisés par lesdites cellules détectées dans le voisinage du point d'accès sans-fil.

4. Procédé selon l'une quelconque des revendications 2 et 3, **caractérisé en ce que** le point d'accès sans-fil effectue ladite collecte de manière régulière indépendamment de toute phase d'appairage.

5. Procédé selon l'une quelconque des revendications 1 à 4, **caractérisé en ce que** le point d'accès sans-fil associe une liste de contrôle d'accès à chaque cellule que le point d'accès sans-fil a créée, chaque liste de contrôle d'accès étant adaptée pour contenir des identifiants de dispositif de communication auxquels le point d'accès sans-fil interdit de communiquer via la cellule à laquelle est associée ladite liste de contrôle d'accès, et le point d'accès sans-fil effectue l'étape suivante sur détection (501) d'un appairage réussi avec un dispositif de communication dans le cadre de ladite phase d'appairage :
- inscrire (505) un identifiant dudit dispositif de communication dans la liste de contrôle d'accès associée à toute cellule créée par le point d'accès sans fil, et appartenant à un même réseau de communication que la cellule via laquelle ledit dispositif de communication a été appairé avec le point d'accès sans fil, et qui est moins occupée que la cellule via laquelle ledit dispositif de communication a été appairé avec le point d'accès sans fil selon l'ordonnancement obtenu.

6. Procédé selon la revendication 5, **caractérisé en ce que**, l'ordonnancement indexant lesdites bandes spectrales de la moins occupée à la plus occupée, le point d'accès effectue l'étape suivante sur détection d'une mise à jour dudit ordonnancement changeant un précédent ordonnancement en un nouvel ordonnancement :
- vider (602) la liste de contrôle d'accès associée à chaque cellule créée dans une bande spectrale qui selon le précédent ordonnancement est d'index supérieur ou égal au premier index en séquence pour lequel il existe une différence entre le précédent ordonnancement et le nouvel ordonnancement.

7. Procédé selon l'une quelconque des revendications 1 à 6, **caractérisé en ce que** le point d'accès sans-fil exporte, dans le cadre d'une procédure d'appairage en champ proche au cours de laquelle le point d'accès sans-fil transmet systématiquement une autorisation d'appairage à tout dispositif de communication qui en fait la demande par communication en champ proche, des descripteurs représentatifs de chaque cellule, lesdits descripteurs étant présentés (702) par le point d'accès sans-fil selon l'ordonnancement obtenu de la bande spectrale la moins occupée à la bande spectrale la plus occupée.

8. Procédé selon l'une quelconque des revendications 1 à 7, **caractérisé en ce que** ladite technologie de communication radio est de type Wi-Fi, et **en ce que** le point d'accès sans-fil crée deux cellules respectivement dans les bandes spectrales à 2.4 GHz et à 5 GHz telles que définies dans le cadre de la technologie de communication radio de type Wi-Fi.

9. Programme d'ordinateur, **caractérisé en ce qu'**il comprend des instructions pour mettre en oeuvre, par un processeur d'un point d'accès sans-fil, le procédé selon l'une quelconque des revendications 1 à 8, lorsque ledit programme est exécuté par ledit processeur.

10. Moyens de stockage, **caractérisés en ce qu'**ils stockent un programme d'ordinateur selon la revendication 9.

11. Point d'accès sans-fil (110) destiné à exécuter une phase d'appairage permettant d'appairer au moins un dispositif de communication (112) audit point d'accès sans-fil, le point d'accès sans-fil étant destiné à créer au moyen d'une technologie de communication radio une pluralité de cellules (151, 152) dans des bandes spectrales respectives distinctes, **caractérisé en ce que** le point d'accès sans-fil implémente dans le cadre de ladite phase d'appairage :
- des moyens pour obtenir (403) un ordonnancement des cellules créées par ledit point d'accès en fonction d'un critère d'occupation desdites bandes spectrales ; et
- des moyens pour activer (404, 406) une autorisation systématique d'appairage via chaque dite cellule pendant une première durée prédéfinie, de tout dispositif de communication qui en fait la demande, en partant de la cellule dans la bande spectrale la moins occupée jusqu'à la cellule dans la bande spectrale la plus occupée d'après l'ordonnancement obtenu, en appliquant (405) un décalage temporel, entre les activations d'autorisation systématique d'appairage, d'une seconde durée prédéfinie qui est au moins égale à un laps de temps statistiquement nécessaire au dispositif de communication pour effectuer l'appairage avec le point d'accès sans-fil et qui est strictement inférieure à ladite première durée prédéfinie.

## Patentansprüche

1. Verfahren zur Ausführung einer Peeringphase, das es ermöglicht, mindestens eine Kommunikationsvorrichtung (112) mit einem drahtlosen Zugangspunkt (110) zusammenzuschließen, der mit Hilfe einer Funkkommunikationstechnologie eine Vielzahl von Zellen (151, 152) in jeweiligen getrennten Spektralbändern erzeugt, **dadurch gekennzeichnet, dass** der drahtlose Zugangspunkt die folgenden Schritte im Rahmen der Peeringphase ausführt:
- Erhalt (403) einer Ordnung der Zellen, die von den Zugangspunkt erzeugt werden, in Abhängigkeit von einem Belegungskriterium der Spektralbänder; und
- Aktivierung (404, 406) einer systematischen Peeringautorisierung über jede Zelle während einer ersten vordefinierten Dauer jeder Kommunikationsvorrichtung, die dies anfordert, ausgehend von der am wenigsten belegten Zelle in dem Spektralband bis zu der am meisten belegten Zelle in dem Spektralband nach der erhaltenen Ordnung, wobei ein Zeitversatz zwischen den Aktivierungen einer systematischen Peeringautorisierung mit einer zweiten vordefinierten Dauer angewandt wird (405), die mindestens gleich einer Zeitspanne ist, die die Kommunikationsvorrichtung statistisch benötigt, um das Peering mit dem drahtlosen Zugangspunkt durchzuführen, und die unbedingt kürzer als die erste vordefinierte Dauer ist.

2. Verfahren nach Anspruch 1, **dadurch gekennzeichnet, dass** für den Erhalt der Ordnung der drahtlose Zugangspunkt ein Sammeln (302) von Informationen zu jeder Zelle, die nach der Funkkommunikationstechnologie erzeugt wurde und von dem drahtlosen Zugangspunkt in der Nähe des drahtlosen Zugangspunktes erfasst wird, durchführt.

3. Verfahren nach Anspruch 2, **dadurch gekennzeichnet, dass** die Spektralbänder in Abhängigkeit von der Menge an Zellen pro Spektralband, die in der Nähe des drahtlosen Zugangspunktes erfasst werden, und/oder von einer Menge an Kommunikationskanälen pro Spektralband, die von den in der Nähe des drahtlosen Zugangspunktes erfassten Zellen verwendet werden, geordnet werden.

4. Verfahren nach einem der Ansprüche 2 und 3, **dadurch gekennzeichnet, dass** der drahtlose Zugangspunkt das Sammeln regelmäßig unabhängig von jeder Peeringphase durchführt.

5. Verfahren nach einem der Ansprüche 1 bis 4, **dadurch gekennzeichnet, dass** der drahtlose Zugangspunkt eine Zugangskontrollliste jeder Zelle, die der drahtlose Zugangspunkt erzeugt hat, zuordnet, wobei jede Zugangskontrollliste geeignet ist, Identifizierungsmittel einer Kommunikationsvorrichtung zu enthalten, denen der drahtlose Zugangspunkt untersagt, über die Zelle, der die Zugangskontrollliste zugeordnet ist, zu kommunizieren, und dass der drahtlose Zugangspunkt den folgenden Schritt bei Erfassung (501) eines erfolgreichen Peerings mit einer Kommunikationsvorrichtung im Rahmen der Peeringphase ausführt:
- Einschreiben (505) eines Identifizierungsmittels der Kommunikationsvorrichtung in die Zugangskontrollliste, die jeder von dem drahtlosen Zugangspunkt erzeugten Zelle zugeordnet ist, und die einem selben Kommunikationsnetz wie die Zelle, über die die Kommunikationsvorrichtung mit dem drahtlosen Zugangspunkt zusammengeschlossen wurde, angehört, und die weniger belegt ist als die Zelle, über die die Kommunikationsvorrichtung mit dem drahtlosen Zugangspunkt nach der erhaltenen Ordnung zusammengeschlossen wurde.

6. Verfahren nach Anspruch 5, **dadurch gekennzeichnet, dass**, da die Ordnung die Spektralbänder von dem am wenigsten belegten bis zu dem am meisten belegten indexiert, der Zugangspunkt den folgenden Schritt bei Erfassung einer Aktualisierung der Ordnung, die eine vorherige Ordnung in eine neue Ordnung umändert, ausführt:
- Leeren (602) der Zugangskontrollliste, die jeder in einem Spektralband erzeugten Zelle zugeordnet ist, die gemäß der vorherigen Ordnung einen Index größer oder gleich dem ersten Index in der Folge hat, für den ein Unterschied zwischen der vorherigen Ordnung und der neuen Ordnung besteht.

7. Verfahren nach einem der Ansprüche 1 bis 6, **dadurch gekennzeichnet, dass** der drahtlose Zugangspunkt im Rahmen eines Peeringverfahrens im Nahfeld, während dessen der drahtlose Zugangspunkt systematisch eine Peeringautorisierung an jede Kommunikationsvorrichtung, die dies anfordert, durch Nahfeldkommunikation überträgt, Deskriptoren, die für jede Zelle repräsentativ sind, exportiert, wobei die Deskriptoren von dem drahtlosen Zugangspunkt gemäß der erhaltenen Ordnung von dem am wenigsten belegten Spektralband bis zu dem am meisten belegten Spektralband präsentiert werden (702).

8. Verfahren nach einem der Ansprüche 1 bis 7, **dadurch gekennzeichnet, dass** die Funkkommunikationstechnologie vom Typ Wi-Fi ist, und dass der drahtlose Zugangspunkt zwei Zellen in den Spektralbändern mit 2,4 GHz bzw. 5 GHz erzeugt, wie im Rahmen der Funkkommunikationstechnologie vom Typ Wi-Fi definiert.

9. Computerprogramm, **dadurch gekennzeichnet, dass** es Anweisungen für den Einsatz des Verfahrens nach einem der Ansprüche 1 bis 8 durch einen Prozessor eines drahtlosen Zugangspunktes umfasst, wenn das Programm von dem Prozessor ausgeführt wird.

10. Speichermittel, **dadurch gekennzeichnet, dass** sie ein Computerprogramm nach Anspruch 9 speichern.

11. Drahtloser Zugangspunkt (110), der dazu bestimmt ist, eine Peeringphase durchzuführen, die es ermöglicht, mindestens eine Kommunikationsvorrichtung (112) mit dem drahtlosen Zugangspunkt zusammenzuschließen, der dazu bestimmt ist, mit Hilfe einer Funkkommunikationstechnologie eine Vielzahl von Zellen (151, 152) in jeweiligen getrennten Spektralbändern zu erzeugen, **dadurch gekennzeichnet, dass** der drahtlose Zugangspunkt im Rahmen der Peeringphase implementiert:
- Mittel zum Erhalt (403) einer Ordnung der Zellen, die von den Zugangspunkt erzeugt werden, in Abhängigkeit von einem Belegungskriterium der Spektralbänder; und
- Mittel zur Aktivierung (404, 406) einer systematischen Peeringautorisierung über jede Zelle während einer ersten vordefinierten Dauer jeder Kommunikationsvorrichtung, die dies anfordert, ausgehend von der am wenigsten belegten Zelle in dem Spektralband bis zu der am meisten belegten Zelle in dem Spektralband nach der erhaltenen Ordnung, wobei ein Zeitversatz zwischen den Aktivierungen einer systematischen Peeringautorisierung mit einer zweiten vordefinierten Dauer angewandt wird (405), die mindestens gleich einer Zeitspanne ist, die die Kommunikationsvorrichtung statistisch benötigt, um das Peering mit dem drahtlosen Zugangspunkt durchzuführen, und die unbedingt kürzer als die erste vordefinierte Dauer ist.

## Claims

1. Method for executing a pairing phase for pairing at least one communication device (112) with a wireless access point (110) creating, by means of a radio communication technology, a plurality of cells (151, 152) in distinct respective spectral bands, **characterised in that** the wireless access point performs the following steps in the context of said pairing phase:
- obtaining (403) a sequencing of the cells created by said access point according to a criterion of occupation of said spectral bands; and
- activating (404, 406) a systematic authorisation of pairing via each said cell during a first predefined duration, of any communication device that so requests, starting from the cell in the least occupied spectral band up to the cell in the most occupied spectral band according to the sequencing obtained, applying (405) a temporal offset, between the systematic authorisations of pairing, of a second predefined duration that is at least equal to a period of time statistically necessary for the communication device to effect the pairing with the wireless access point and which is strictly less than said first predefined duration.

2. Method according to claim 1, **characterised in that**, in order to obtain said sequencing, the wireless access point effects a collection (302) of information relating to any cell created according to said radio communication technology and detected by said wireless access point in the vicinity of said wireless access point.

3. Method according to claim 2, **characterised in that** said spectral bands are sequenced according the quantity of cells, per spectral band, detected in the vicinity of the wireless access point and/or a quantity of communication channels, per spectral band, used by said cells detected in the vicinity of the wireless access point.

4. Method according to either claim 2 or claim 3, **characterised in that** the wireless access point effects said collection regularly independently of any pairing phase.

5. Method according to any of claims 1 to 4, **characterised in that** the wireless access point associates an access control list with each cell that the wireless access point has created, each access control list being adapted to contain identifiers of communication devices with which the wireless access point prevents communication via the cell with which said access control list is associated, and the wireless access point performs the following step on detection (501) of a successful pairing with a communication device in the context of said pairing phase:
- entering (505) an identifier of said communication device in the access control list associated with any cell created by the wireless access point, and belonging to the same communication network as the cell via which said communication device was matched with the wireless access point, and which is less occupied than the cell via which said communication device was paired with the wireless access point according to the sequencing obtained.

6. Method according to claim 5, **characterised in that**, the sequencing indexing said spectral bands from the least occupied to the most occupied, the access point performs the following step on detection of an updating of said sequencing changing a previous sequencing into a new sequencing:
- emptying (602) the access control list associated with each cell created in a spectral band which, according to the previous sequencing, has an index higher than or equal to the first index in sequence for which there exists a difference between the previous sequencing and the new sequencing.

7. Method according to any of claims 1 to 6, **characterised in that** the wireless access point, in the context of a near-field pairing procedure during which the wireless access point systematically transmits a pairing authorisation to any communication device that so requests by near-field communication, exports records representing each cell, said records being presented (702) by the wireless access point according to the sequencing obtained from the least occupied spectral band to the most occupied spectral band.

8. Method according to any of claims 1 to 7, **characterised in that** said radio communication technology is of the Wi-Fi type, and **in that** the wireless access point creates two cells respectively in the spectral bands at 2.4 GHz and 5 GHz as defined in the context of the Wi-Fi radio communication technology.

9. Computer program, **characterised in that** it comprises instructions for the implementation, by a processor of a wireless access point, of the method according to any of claims 1 to 8, when said program is executed by said processor.

10. Storage means, **characterised in that** they store a computer program according to claim 9.

11. Wireless access point (110) intended to execute a pairing phase for pairing at least one communication device (112) with said wireless access point, the wireless access point being intended to create, by means of a radio communication technology, a plurality of cells (151, 152) in distinct respective spectral bands, **characterised in that** the wireless access point implements, in the context of said pairing phase:
- means for obtaining (403) a sequencing of the cells created by said access point according to a criterion of occupation of said spectral bands; and
- means for activating (404, 406) a systematic authorisation of pairing via each said cell for a first predefined duration, of any communication device that so requests, starting from the cell in the spectral band least occupied to the cell in the spectral band most occupied according to the sequencing obtained, by applying (405) a temporal offset, between the systematic authorisations of pairing, of a second predefined duration that is at least equal to a period of time statistically necessary for the communication device to effect the pairing with the wireless access point and which is strictly less than said first predefined duration.
